# FASCICULE DE BREVET EUROPEEN

(11) **EP 2 223 481 B1**
(45) Date de publication et mention de la délivrance du brevet: **17.08.2011**
(21) Numéro de dépôt: 08869097.9
(22) Date de dépôt: 16.12.2008
(51) Int. Cl.: H04L 12/58

(54) **SYSTÈME ET PROCÉDÉ DE GESTION DE MESSAGERIES FÉDÉRÉES**
SYSTEM UND VERFAHREN ZUR VERWALTUNG FÖDERIERTER NACHRICHTENÜBERMITTLUNGEN
SYSTEM AND METHOD FOR MANAGING FEDERATED MESSAGINGS

(30) Priorité: 20.12.2007 FR 0760118
(43) Date de publication de la demande: 01.09.2010
(73) Titulaire: FRANCE TELECOM, 75015 Paris (FR)
(72) Inventeur: BRIAND, Olivier, 35200 Rennes (FR); COURVAL, Lionel, F-14210 Amaye sur Orne (FR); FOUCHER, Agnès, F-14280 Saint-Contest (FR)
(86) Numéro de dépôt international: PCT/FR2008/052324
(87) Numéro de publication internationale: WO 2009/083684

(56) Documents cités:
- WO-A-00/45557
- WO-A-2006/101428
- US-A- 5 647 002
- US-B1- 6 987 840

## Description

La présente invention concerne le domaine de la gestion des systèmes de messageries.

Plus précisément, l'invention concerne la gestion de messages (courriers électroniques, messages vocaux) dans un système de messagerie fédérée et plus précisément encore, la gestion de la cohérence des messages et de l'accès aux contenus média dans un tel système de messagerie fédérée.

Les systèmes de messagerie les plus répandus concernent le courriel ou courrier électronique (plus couramment dénommé e-mail), est les messageries vocales accessibles au moyens de terminaux mobiles ou fixes de télécommunications, ou bien encore les messageries vidéo utilisables au moyen d'un dispositif de visiophonie.

Le plus souvent, un message est constitué d'une entête (émetteur, récepteur, objet du message, date, etc.) et d'un corpus ou contenu, soit écrit pour ce'qui concerne les messages électroniques (courriels), soit audio (messagerie vocale de téléphonie fixe ou mobile), voir même vidéo dans un contexte de téléphone-visiophone.

Il est connu de l'art antérieur des systèmes de messagerie unifiée permettant à un utilisateur d'accéder et de gérer l'ensemble de ses messages, quelle qu'en soit la provenance : messagerie de courriers électroniques, messagerie vocale, messagerie fax, et par extension messagerie vidéo.

Généralement, un système de messagerie unifié est constitué d'un ou de plusieurs dispositifs de messagerie (couramment dénommés "backends" de messagerie selon la terminologie anglaise) adaptés pour assurer la gestion et le stockage des messages, ainsi qu'associés à chacun de ces dispositifs de messagerie, une ou plusieurs interfaces (couramment dénommées "frontends" de messagerie également selon la terminologie anglaise) adaptées pour gérer l'accès des utilisateurs à leurs messageries respectives.

Sont déjà connues de l'art antérieur quatre types d'architectures de messagerie unifiée ayant été définies majoritairement par des éditeurs de logiciels et/ou des industriels comme Cisco, Alcatel, 3Com, Avaya, Cycos, Tetco (marques déposées), par exemple.

Un premier type d'architecture de système de messagerie unifiée connu de l'art antérieur propose d'unifier sur les postes ou terminaux clients l'accès d'un utilisateur aux messageries auprès desquelles il dispose d'un ou de plusieurs comptes de messagerie.

Dans une telle architecture, une API (pour "Application Programming Interface" en anglais, ou "Interface de Programmation d'Application" en français) spécifique est définie pour permettre un accès aux messages vocaux mémorisés sur un PBX (pour "Private Branch eXanche" en anglais, qui désigne dans le parc d'une entreprise, le dispositif d'échange interne de données et de liaison avec le réseau téléphonique) via un logiciel de messagerie écrite exécutée sur le poste ou le terminal client.
Une telle solution ne convient cependant qu'à des structures d'entreprise de taille réduite (petites entreprises essentiellement de moins de cinquante personnes). Elle est en effet relativement difficile à maintenir techniquement, toute la logique concernant l'unification de l'accès aux messages se trouvant déportée sur le terminal ou poste client. De plus, une telle architecture nécessite de prévoir et de gérer plusieurs comptes de messagerie pour chaque utilisateur.

Un deuxième type d'architecture de système de messagerie unifiée connu de l'art antérieur met en oeuvre une synchronisation entre les différents dispositifs serveurs de messageries pour permettre leur unification, c'est-à-dire pour permettre aux utilisateurs disposant d'un compte de messagerie de pouvoir consulter ses messages électroniques sous la forme d'un message vocal auprès de sa messagerie vocale accessible au moyen de son terminal de communication fixe ou mobile, aussi bien que de pouvoir consulter ses messages vocaux disponibles sur la messagerie de son téléphone fixe ou mobile, au moyen de sa messagerie électronique, indifféremment. Un tel système de messagerie unifiée conforme à ce deuxième type d'architecture implique cependant de devoir répliquer les différents messages dans les espaces mémoires respectifs de tous les dispositifs de messagerie ("backends"), ce qui augmente le coût induit pas les besoins croissants d'espaces de stockage pour ces derniers. Il a pour autre inconvénient de générer des conflits de synchronisation souvent difficiles à résoudre, pour ce qui concerne l'accès unifié aux messages lorsque ces derniers sont de différents types ou formats, notamment. Une telle solution selon l'art antérieur s'avère en outre très coûteuse et peu adaptée pour une mise en oeuvre sous la forme d'un service destiné au grand public.

Un troisième type d'architecture de système de messagerie unifiée connu de l'art antérieur vise à fusionner les différents dispositifs de messagerie, c'est-à-dire à fusionner les différents "backends", de façon à stocker l'ensemble de tous les messages reçus auprès de ces différents "backends" de messagerie sur un seul et même serveur de messagerie. Il permet en outre d'éviter la réplication des messages sur chaque dispositif de messagerie, comme dans le cas de la deuxième architecture décrite ci-dessus. Ce troisième type d'architecture est connu du document WO 2006/101428 A. Une telle approche selon l'art antérieur a pour inconvénient, cependant, de nécessiter que les technologies respectives des différents dispositifs de messagerie ("backends" notamment) soient suffisamment ouvertes et évoluées à la base pour pouvoir s'adapter à une telle possibilité de mise en oeuvre, ce qui s'avère être rarement le cas. Cependant, même en faisant l'hypothèse d'une telle possibilité d'ouverture et d'évolutivité de ces derniers, un inconvénient de ce troisième type d'architecture est lié au fait qu'il impose des migrations de données souvent coûteuses et risquées, celles-ci induisant généralement des pertes de données relatives aux messages stockés.

Un quatrième type d'architecture de système de messagerie unifiée connu de l'art antérieur consiste à unifier le système de communication autour d'un annuaire central. Selon une telle solution, tous les messages sont stockés de manière centrale, de même que la gestion des accès à sa messagerie par un utilisateur, sous toute ses formes : messages électroniques (courriels), messages audio/ vocaux, messages vidéo ou fax. Une telle approche selon l'art antérieur s'avère relativement récente. Elle est encore peut éprouvée, mais s'avère d'ores et déjà coûteuse en termes de gestion et de support technique de l'infrastructure matérielle et logicielle qu'elle impose de mettre en oeuvre pour pouvoir fonctionner.

La présente invention offre une solution qui ne présente pas les inconvénients présentés ci-dessus en relation avec les différents types connus d'architectures de systèmes de messageries unifiées selon l'art antérieur.

L'invention vise à résoudre les inconvénients précités en proposant un procédé et un système de gestion fédérée d'un ensemble de messageries multimédia et qui permet d'assurer à faible coût et sans risque, une gestion cohérente et unifiée de l'ensemble de tous les messages de formats hétérogènes stockés auprès de chacune desdites messageries (messagerie électronique, messagerie vocale/ audio, messagerie vidéo...) pour un utilisateur.

Par messagerie ou dispositif de messagerie, on entendra indifféremment dans la suite de ce document tout ensemble formé par l'interface de messagerie, dite "frontend" de, messagerie et par le dispositif de messagerie, dit "backend" de messagerie, comprenant des moyens de stockage des messages d'utilisateurs disposant d'un compte de messagerie.

A cet effet, l'invention concerne un système de gestion de messageries selon la revendication 1, comprenant une pluralité de messageries adaptées pour recevoir et mémoriser des messages destinés à au moins un utilisateur disposant d'une pluralité de terminaux d'accès, auxdites messageries.

Un tel système de messagerie fédéré selon l'invention permet aux utilisateurs de profiter d'un accès unifié à l'ensemble des messages disponibles auprès de leurs différents dispositifs de messagerie, à partir de leurs terminaux d'accès distincts, voir hétérogènes.

Ainsi, lorsqu'un nouveau message d'un type déterminé est déposé sur un dispositif de messagerie correspondant d'un utilisateur, les autres dispositifs de messagerie en sont informés respectivement, le nouveau message reçu étant quant à lui répertorié d'une manière centrale dans une base de données de référencement de tous les messages vus par chacun des dispositifs de messagerie constitutifs dudit système selon l'invention.

Ainsi, à titre de simple exemple illustratif et non limitatif, si un utilisateur du système de messagerie fédérée selon l'invention possède un compte d'utilisateur auprès d'une messagerie électronique, d'une messagerie vocale fixe accessible via un téléphone fixe, d'une messagerie vocale mobile accessible via son téléphone mobile et d'une messagerie vidéo accessible via son visiophone, lorsqu'un nouveau message vocal est déposé sur une de ses messageries, les autres messageries en sont directement informées par l'intermédiaire de leurs interfaces respectives (ou "frontends" de messagerie) et le nouveau message est répertorié dans une base centrale, dite de référence et contenant des informations relatives de tous les messages fédérés.

L'utilisateur disposant de plusieurs messageries référencées dans un profil de messagerie qui lui est propre auprès dudit système selon l'invention, le nouveau message vocal est alors traduit dans un format compatible avec les autres dispositifs de messagerie auprès desquels ledit utilisateur possède un compte de messagerie.
Par exemple, si le nouveau message vocal est déposé auprès d'un dispositif de messagerie au format audio G711, il sera alors traité par les moyens de traitement du système selon l'invention pour être traduit dans un format de type MP3 compatible pour être consulté sous la forme d'un courrier électronique, via l'interface de consultation du dispositif de courrier électronique.

Un avantage du système de messagerie fédérée selon l'invention est qu'il n'implique aucune modification matérielle ou logicielle au niveau des différents dispositifs de messagerie ("backends" de messagerie) qu'il intègre, lesquels servant toujours à stocker physiquement les messages déposés auprès d'eux dans un format prédéterminé.
Dans ce système, on se contente avantageusement d'ajouter des moyens partagés entre les différents dispositifs de messagerie, ces moyens se présentant sous la forme d'une base de données, dite base de référencement des messages, contenant les entêtes de tous les messages auxquelles on associe un pointeur vers le message physique dont le stockage est maintenu sur le dispositif de messagerie ("backend") au moyen duquel il a été reçu.
Un gestionnaire d'interface associé à chaque dispositif de messagerie permet de mettre à jour la base de données de référencement des messages, de façon à permettre le maintien de la cohérence globale de l'ensemble de tous les messages référencés dans la base de données dont la vue est partagée par tous les dispositifs de messagerie constitutifs du système.

Ainsi, de la même manière que pour la gestion d'un évènement correspondant à l'arrivée d'un nouveau message déposé auprès d'un dispositif de messagerie, tout évènement relatif à la suppression d'un message sera notifié aux différents autres dispositifs de messagerie et le message supprimé sera d'une part retiré de la base de données de référencement et, sera d'autre part supprimé physiquement de l'espace mémoire du dispositif de messagerie dans lequel il était physiquement stocké.

Le système de gestion de messageries selon l'invention nécessite finalement que peu de développements matériels et/ou logiciels en ce qu'il permet de prendre en compte l'existant en s'adaptant à celui-ci, tout en garantissant un maximum de possibilité d'unification des messages au niveau des différents serveurs de messagerie.

Il favorise aussi une consultation unifiée des messages aussi bien par l'intermédiaire des différentes interfaces de consultation ("frontends" de messagerie) disponibles, que par l'intermédiaire d'une interface unifiée permettant la consultation de tous les différents typés de messages reçus auprès de ces différents serveurs.

Préférentiellement, lesdites moyens de traitement sont des moyens de traduction d'un nouveau message reçu dans un premier format compatible avec un première desdites messageries, sous la forme d'au moins un message traduit dans un deuxième format prédéterminé compatible avec au moins une deuxième desdites messageries.

Ainsi, un message stocké dans un premier format compatible sur un premier dispositif de messagerie pourra être lu par son utilisateur destinataire via une interface de consultation associé à un dispositif de messagerie compatible avec un deuxième format de message. Une telle approche selon l'invention permet ainsi d'assurer une gestion fédérée, à la fois cohérente et globale de l'ensemble des messages stockés sur chacun desdits dispositifs de messagerie, par l'établissement d'un dialogue entre les différents dispositifs. Un tel dialogue est basé sur une traduction des messages stockés dans un premier format sur un premier dispositif de messagerie vers au moins un deuxième format compatible pour une consultation du même message au moyen de chacun des autres dispositifs de messagerie auprès desquels le destinataire dudit message possède un compte de messagerie.

De façon avantageuse, le système selon l'invention comprend des moyens de notification de tout événement relatif à tout nouveau message reçu par une desdites messageries, à destination de toutes lesdites autres messageries.

Il s'agit notamment de permettre à tous les dispositifs de messagerie rattachés audit système d'être informés en temps réel de l'arrivée de tout nouveau message auprès d'un des dispositifs de messagerie, de façon que ce message puisse ensuite être consulté par l'utilisateur destinataire dudit nouveau message, au moyen de l'une quelconque de ses interfaces de consultation de messageries, indifféremment.

De façon avantageuse, le système selon l'invention comprend des moyens de notification de tout événement relatif à un message stocké dans un espace mémoire d'une desdites messageries, à destination de toutes lesdites autres messageries.

Il s'agit ici que toute messagerie puisse être informée de tout évènement survenu relativement à un message stocké auprès de n'importe laquelle desdites messageries, par exemple un événement de demande de suppression, de façon à ce qu'un tel message supprimé ne soit plus visible d'aucune desdites messageries.

Dans un mode de réalisation spécifique de l'invention, ledit deuxième format prédéterminé est un format générique, dit format pivot, compatible avec le plus grand nombre de formats de messages acceptés par lesdites messageries de ladite pluralité de messageries.
Un tel mode de réalisation offre pour avantage de limiter le nombre des conversions de message d'un format vers d'autres formats. Il s'agit ici de déterminer le format de conversion d'un message d'un format initial, qui soit compatible pour une consultation possible par le plus grand nombre des messageries disponibles pour un utilisateur. Un tel format, dit format pivot intermédiaire, pourra aussi être spécifié dans chacun des profiles de messagerie préalablement définis pour chaque utilisateur disposant d'un ou de plusieurs comptes de messageries (emails, vocales, vidéo, fax, etc.).

L'utilisation d'une base de données pour le référencement centralisé et partagé de tous les messages stockés auprès des différentes messageries ("backends") permet d'assurer une gestion globale et cohérente de l'ensemble des messages et un accès unifié à l'ensemble de ces derniers, lesquels deviennent alors consultables par leurs destinataires respectifs, à partir de l'une quelconque de leurs interfaces de consultations de messagerie.

Un utilisateur pourra ainsi, aussi bien consulter un message vocal initialement déposé sur sa messagerie vocale (fixe ou mobile) sous la forme d'un message électronique écrit, ou bien encore, consulter un de ses courriers électroniques initialement déposé sur sa messagerie électronique, dans un format audio et au moyen de la boîte vocale de sa messagerie vocale accessible depuis son téléphone fixe ou mobile.

Dans un mode de réalisation avantageux de l'invention, ladite base de données de référencement comprend pour chaque message référencé :
■ un identifiant unique dudit message référencé ;
■ un pointeur d'accès audit message stocké auprès d'une desdites messageries.

Ainsi, dans le système selon l'invention, on ne modifie pas les messageries ("backends") permettant le stockage de leur propres types de messages, ni encore les interfaces de consultation ("frontends") et d'accès à de tels messageries, mais on se contente d'ajouter de façon avantageuse une simple base de données contenant les entêtes de tous les messages, chaque de ces entêtes étant associé à un pointeur d'accès au message physique stocké auprès d'une desdites messageries. Une telle approche permet d'assurer une cohérence globale de la vue de tous les messages partagée par chacune desdites messageries.

Dans un mode de réalisation spécifique de l'invention, le système selon l'invention comprend en outre des moyens de gestion de comptes d'utilisateurs répartis auprès des différentes messageries, chacune desdites messageries sur lesquelles un utilisateur donné possède un compte de messagerie étant référencé dans un profile de messagerie défini pour ledit utilisateur donné.
Un profile d'utilisateur contiendra avantageusement les différents formats multimédia de message compatibles avec les dispositifs de messagerie auprès desquels ledit utilisateur possède un compte de messagerie, de façon à pouvoir anticiper toute traduction de message dans l'un de ces formats compatibles.

L'invention concerne également une plateforme de messagerie fédérée selon la revendication 8, comportant un système de gestion de messageries conforme au système décrit ci-dessus.

Une telle plateforme selon l'invention autorise une traduction des messages dans les différents formats, sans plus de nécessité qu'une telle traduction soit réalisée en temps réel à chaque arrivée d'un nouveau message sur une desdites messageries.

Elle permet également de s'affranchir de toute réplication des messages comme dans les systèmes connus de l'art antérieur.

L'invention concerne aussi un procédé de gestion selon la revendication 9, d'un système de messageries comprenant une pluralité de messageries adaptées pour recevoir et mémoriser des messages destinés à au moins un utilisateur disposant d'une pluralité de terminaux d'accès auxdites messageries.

Dans un mode de réalisation préféré de l'invention, l'étape de traitement de ce procédé est une étape de traduction d'un nouveau message reçu dans un premier format compatible avec un premier desdits dispositif de messagerie, sous la forme d'au moins un message traduit dans un deuxième format prédéterminé compatible avec au moins un deuxième desdits dispositifs de messagerie.

Préférentiellement, ladite étape de traitement est une étape de traduction d'un nouveau message reçu dans un premier format compatible avec une première desdites messageries, sous la fonne d'au moins un message traduit dans un deuxième format prédéterminé compatible avec au moins une deuxième desdites messageries.

De façon préférentielle, ledit procédé comprend une étape de notification de tout évènement relatif à tout nouveau message reçu par une desdites messageries, à destination de toutes lesdites autres messageries.

L'invention concerne aussi un produit programme d'ordinateur téléchargeable depuis un réseau de communication et/ou stocké sur un support d'information lisible par ordinateur et/ou exécutable par un microprocesseur, un tel produit programme d'ordinateur comprenant des instructions de code pour l'exécution d'un procédé de gestion d'un système de messageries conforme au procédé précité, lorsqu'il est exécuté sur un terminal d'ordinateur.

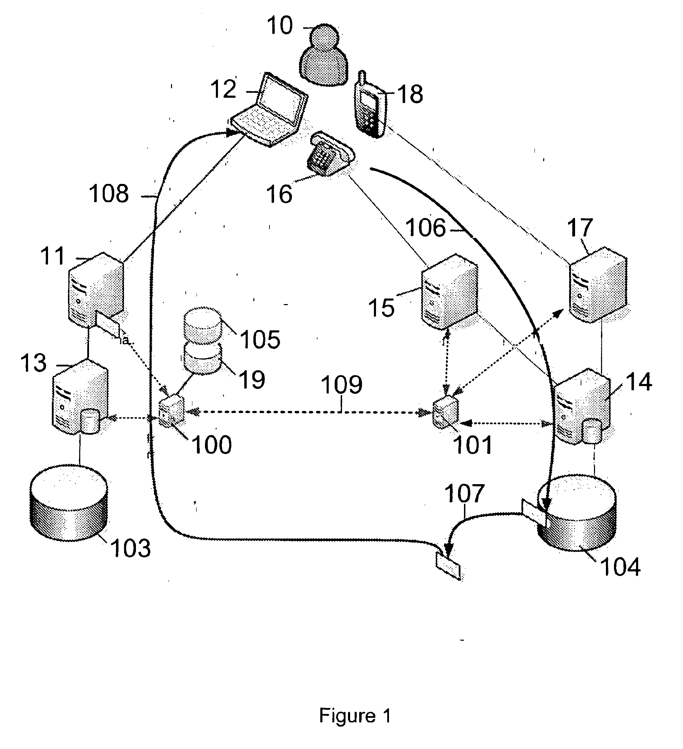

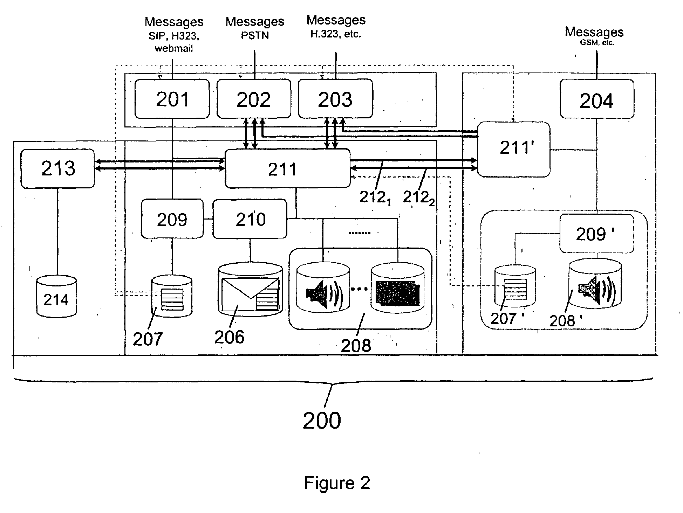

Les caractéristiques et avantages techniques de la présente invention ressortiront mieux de la description suivante, faite à titre indicatif et non limitatif, au regard des dessins annexés sur lesquels:
■ la figure 1 présente un exemple d'architecture matérielle d'un système de gestion de messagerie fédérée selon l'invention ;
■ la figure 2 présente une architecture détaillée du système de messagerie fédérée selon l'invention ;
■ la figure, 3 est un diagramme de blocs résumant les grandes étapes du procédé de gestion d'un système de messageries multimédia selon l'invention.

La figure 1 illustre un utilisateur 10 d'un système de messagerie fédérée selon l'invention, système pouvant s'apparenter à une plateforme de messagerie fédérée.

Comme illustré sur la figure, l'utilisateur 10 dispose d'une messagerie ("backend" mail) 13 de courrier électronique accessible via un "frontend mail" 11 de messagerie apte à, collaborer avec un terminal 12 du type terminal d'ordinateur pour la consultation des messages électroniques. L'utilisateur 10 dispose aussi d'une messagerie 14 ("backend" audio) vocale accessible via un "frontend audio fixe" 15 de messagerie, apte à collaborer avec un terminal du type téléphone 16 fixe, ou bien via un "frontend mobile " 17 de messagerie, apte à collaborer avec un terminal 18 mobile du type téléphone mobile.

Conformément à l'invention, une base 19 de données servant à référencer tous les messages stockés auprès des différents "backends" (13, 14) de messagerie est partagées entre ces derniers, de façon à leur fournir une vue cohérente et globale de tous les messages de formats distincts accessibles à l'utilisateur 10 via ses terminaux (12, 16, 18) pour consultation. Cette base 19 de données contient les entêtes de tous les messages de différents types respectivement stockés sur chacun des dispositifs (13, 14) de gestion de messagerie ("backends" de messagerie), chacune de ces entêtes de message étant associée dans la base 19 de données à un pointeur permettant d'adresser le message physique correspondant et stocké sur un des dispositifs (13, 14) de messagerie.

Chaque "backend" (13, 14) de messagerie comporte au moins une base de données (respectivement référencées 103, 104 sur la figure 1) pour stocker les messages de format correspondant.

Le système selon l'invention prévoit également un gestionnaire 100, 101 d'interface apte à collaborer avec chaque "backend" 13, 14 de messagerie, respectivement. Ces gestionnaires 100, 101 (un par "backend" de messagerie) d'interface forment moyens de gestion centralisée des évènements associés à chacun des messages stockés auprès des différents "backends" 13 et 14. Ils sont adaptés pour mettre à jour la base 19 de données servant à référencer tous les messages stockés dans les bases 103, 104 de données de chacun des "backends" 13, 14 de messagerie. Ils sont adaptés pour collaborer avec des moyens de traitement desdits évènements partagés entre chacun desdits dispositifs 13, 14 de messagerie.

Lorsqu'un message vocal ou vidéo est déposé sur un des dispositifs 13, 14 de messagerie, les autres dispositifs de messagerie sont automatiquement informés via les gestionnaires 100, 101 d'interface décrits ci-dessus et le message est répertorié dans la base 19 des références.

L'utilisateur 10 disposant donc de plusieurs messageries (11, 12, 13) ou (14, 15, 16 ; 14, 17, 18) référencées dans un profile de messagerie stocké dans une base 105 de données contenant des profiles de messagerie d'utilisateurs, le message vocal ou vidéo est ensuite traduit dans un format exploitable par les autres messageries par l'intermédiaire desquelles l'utilisateur 10 pourra ensuite consulter le message vocal initialement déposé.

Ainsi, la base 19 de données de référencement des messages contient les informations propres à tous les messages consultables au travers le système de messagerie fédérée selon l'invention, ainsi que la localisation physique de ces derniers dans les bases 103, 104 de données des différents dispositifs 13, 14 de messagerie et pour chaque utilisateur auxquels ils sont destinés.

La base 105 des profiles d'utilisateurs contient quant à elle tous les différents types de dispositifs 13, 14 de messagerie auprès desquels les utilisateurs dudit système selon l'invention possèdent des comptes de messagerie, ainsi que pour chacun de ces dispositifs 13, 14 de messagerie, les formats de message supportés par ces derniers, respectivement.

Par exemple si un message vocal est déposé 106 au format audio G711, celui-ci sera alors traduit 107 au format MP3 pour pouvoir être ensuite accédé et/ou consulté 108 sous la forme d'un courrier électronique, au moyen du terminal d'ordinateur 12 sur lequel est exécuté un client de messagerie (application logicielle dédiée).

Le format de traduction ou de transcodage d'un message déposé dans un premier format pourra avantageusement prendre la forme d'un format générique plus répandu, tel que le format MP3 pour les messages vocaux. Un tel format sera appelé format "pivot".

Afin d'éviter la multiplication des formats stockés, le format pivot sera préféré pour être le seul, à être conservé en plus du format originel.

En relation avec la figure 1, on présente à titre de simples exemples illustratifs et non limitatif de l'invention les deux scenarii d'usage suivants.

Un premier scénario concerne un utilisateur disposant d'un premier compte de messagerie sur un dispositif de messagerie vidéo, du type "backend de messagerie vidéo" et d'un deuxième compte de messagerie sur un dispositif de messagerie vocale mobile.

Dans le cadre de ce scénario d'usage :
- un message vidéo (consultable habituellement au moyen d'un téléphone de type visiophone) est reçu au format vidéo MP4 (codec vidéo H264 et codec audio AAC);
- par l'intermédiaire d'un gestionnaire 100 ou 101 d'interface, le message est notifié au dispositif de messagerie vocale mobile. Il est également répertorié dans la base 19 de référencement des messages ;
- l'utilisateur 10 disposant aussi d'une messagerie vocale mobile supportant les fichiers au format AMR (pour "Adaptative Multi-rate Codec" en anglais - format audio utilisé sur les téléphones mobiles pour coder les enregistrements et le contenu audio des messages MMS (pour "Multimédia Message Service" en anglais, service de message multimédia, en français)), le message initial au format mp4 est alors traduit par dans le format AMR, selon des règles de traduction préalablement renseignées dans le profil stocké dans la base 105 des profiles, pour ledit utilisateur 10. La base 19 de références contient alors l'entête du message vidéo (expéditeur, destinataire, sujet, timestamp...) et les différents formats disponibles (par exemple mp4, H264, AAC et AMR) dans lesquels ce message pourra être indifféremment consulté par l'utilisateur 10;
- si l'utilisateur 10 souhaite consulter ses messages à partir de sa messagerie mobile, il peut alors écouter le message au format AMR.

Un deuxième scénario concerne un utilisateur disposant d'un premier compte de messagerie sur un dispositif de messagerie électronique, du type "backend de messagerie électronique" et d'un deuxième compte de messagerie sur un dispositif de messagerie vocale fixe.

Dans le cadre de ce scénario d'usage et comme illustré sur la figure 1 :
- un message vocal est reçu 106 au format G711 sur le "backend" 14 audio du dispositif de messagerie vocale de l'utilisateur 10;
- par l'intermédiaire du gestionnaire 100, 101 d'interface, le message reçu est notifié 109 au dispositif 14 de gestion de messagerie vocale mobile et au dispositif 13 de messagerie électronique. Il est également répertorié dans la base 19 de référencement des messages ;
- l'utilisateur 10 disposant aussi d'une messagerie électronique supportant les fichiers au format MP3, le message vocal est ensuite traduit au format MP3, selon des règles de traduction ou de transcodage préalablement définies dans un profile dudit utilisateur 10, dans la base 105 de profiles d'utilisateur. La base 19 de références contient alors l'entête du message (expéditeur, destinataire, sujet, timestamp...) et ses formats disponibles (G711 et MP3);
- lorsque l'utilisateur 10 souhaite consulter ses messages à partir de son mail, il peut alors écouter le message au format MP3 en mode de téléchargement continu ("streaming") sur son PC ou son PDA.

Le format pivot évoqué plus haut est utile lorsque l'utilisateur 10 dispose d'un compte de messagerie auprès de plusieurs dispositifs de messagerie supportant chacun des formats de messages différents. Dans ce cas le format pivot permet de minimiser le coût de stockage du message et de garder un maximum d'accessibilité au contenu, tout en minimisant les transcodages à réaliser.

Comme illustré sur la figure 2, dans un mode de réalisation avantageux de l'invention, le système de gestion de messagerie multimédia fédérée se présente sous la forme d'une plateforme 200 de messagerie fédérée.

Dans l'exemple de la figure 2, une telle plateforme 200 permet à un utilisateur d'accéder :
- à des messages au formant SIP, H.323, ou bien encore webmail, par l'intermédiaire d'un "frontend" 201 de messagerie électronique ;
- à des messages de format PSTN par l'intermédiaire d'un "frontend" 202 de messagerie vocale accessible depuis un terminal type téléphone fixe de maison;
- à des messages de format multimédia conformes au standard H.323 ou autres, par l'intermédiaire d'un "frontend" 203 de messagerie adaptée ;
- à des messages GSM de format audio ou autres, par l'intermédiaire d'un "frontend" 204 de messagerie vocal accessible depuis un terminal type téléphone mobile.

Une telle plateforme 200 de messagerie fédérée comprend une base 206 de données de référencement de tous les messages stockés physiquement dans des bases (208, 208') de données spécifiques administrées par chacun des "backends" (209, 209') des différents dispositifs (201, 209) (202, 209) (203, 209) et (204, 209) de messagerie ("frontends" et "backends" de messagerie) administrés de façon unifiée au moyen de ladite plateforme 200.

Un gestionnaire 210 de message de ladite plateforme 200 permet d'assurer une gestion et une administration cohérente de tous les messages contenus dans chacune des bases 208 et 208' de données, de façon que tous les dispositifs (201, 209) (202, 209) (203, 209) et (204, 209') de messagerie puissent partager à tout instant une même vue de tous ces messages référencés dans la base 206 de données de référencement de ces derniers.

Des bases 207 et 207' de données contenant des profiles de messagerie associés à chaque compte d'utilisateur et contenant pour chacun des utilisateurs référencés, tous les dispositifs de messagerie accessibles à ces derniers, ainsi que tous les formats de message supportés par les interfaces de consultation (terminaux, client weblmail, etc.) à leur disposition.

Des interfaces 211 et 211' spécifiques permettent un dialogue (212₁, 212₂) entre les différents dispositifs de messagerie, de façon que ces derniers puissent partager une même vue de l'ensemble des messages stocker auprès de chacun d'entre eux et globalement répertoriés/ référencés dans la base 206 de données de référencement. Ils servent également de moyens de notification de tout évènements concernant les messages nouvellement arrivés ou stockés à tous les autres dispositifs de messagerie.

De telles interfaces 211 et 211' servent également à alimenter les moyens 213 de traductions des messages avec des messages ayant un premier format déterminé compatible avec au moins un des dispositifs (201, 209) (202, 209) (203, 209) et (204, 209') de messagerie, en vue de la production d'un message traduit dans un deuxième format compatible avec au moins un autre desdits dispositifs (201, 209) (202, 209) (203, 209) et (204, 209') de messagerie. Ces moyens 213 de traductions constituent l'une des clés de voûte de l'invention puisqu'ils garantissent qu'un utilisateur puisse accéder à et consulter ses messages disponibles auprès de différents dispositifs de messagerie (courrier électronique, messagerie vocale fixe ou mobile, messagerie vidéo, etc.) de manière unifiée au moyen de l'un quelconque de ses terminaux de communication. Il pourra en effet consulter indifféremment un de ses courriers électronique préalablement traduit par les moyens 213 de traduction (moyens de transcodage par exemple) sous la forme d'un message audio, au moyen de la messagerie vocale de son téléphone fixe ou de son téléphone mobile, ou bien lire sous la forme d'un courrier électronique un message vocale initialement déposé sur une de ses boîtes vocales de téléphone fixe ou mobile, après conversion de ce dernier par les moyens 213 de traduction.

Dans l'exemple de la figure 2 et de façon à faciliter la traduction (le transcodage des messages, par exemple), des messages, les moyens 213 de traduction utilisent une mémoire 214 de cache.

Chaque dispositif (201, 209) (202, 209) (203, 209) et (204, 209') de messagerie stocke des messages correspondant à ses propres formats compatibles.

La base 206 de données de référencement des messages contient des identifiants de messages associés à des pointeurs vers les messages physiques stockés auprès des différents dispositifs (201, 209) (202, 209) (203, 209) et (204, 209') de messagerie, de tels pointeurs pouvant avantageusement prendre la forme d'URL ("Uniform Ressource Locator" selon une terminologie communément adoptée).

Une telle plateforme selon l'invention autorise une traduction des messages dans les différents formats, sans plus de nécessité qu'une telle traduction soit réalisée en temps réelle à chaque arrivée d'un nouveau message sur un desdits dispositifs de messagerie.

Elle permet également de s'affranchir de toute réplication des messages comme dans les systèmes connus de l'art antérieur.

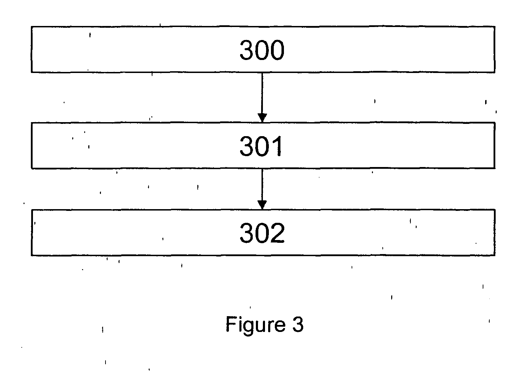

La figure 3 résume enfin les grandes étapes du procédé de gestion d'un système de messageries multimédia conforme au système, ledit système comprenant :
■ une pluralité de dispositifs de messagerie adaptés pour recevoir et mémoriser des messages multimédia de format prédéterminé et destinés à un utilisateur destinataire identifié auprès dudit système de messagerie ;
■ une pluralité d'applications de messagerie reliées chacune à au moins un desdits dispositifs de messagerie de type correspondant, pour permettre audit utilisateur destinataire gérer lesdits messages multimédia de format prédéterminé.
Selon l'invention, un tel procédé comprend avantageusement :
■ une étape (300) de gestion centralisée d'événements associés à chacun des messages stockés auprès desdits dispositifs de messagerie, respectivement ;
■ une étape (301) de traitement desdits évènements dont le résultat est partagé entre chacun desdits dispositifs de messageries, le traitement pouvant avantageusement prendre la forme d'une traduction d'un nouveau message reçu dans un premier format compatible avec un premier desdits dispositif de messagerie, sous la forme d'au moins un message traduit dans un deuxième format prédéterminé compatible avec au moins un deuxième desdits dispositifs de messagerie, dans un mode de réalisation préféré de l'invention.

Un tel procédé selon l'invention comprend une étape 302 de notification de tout évènement relatif à tout nouveau message reçu par un desdits dispositifs de messagerie à tous lesdits autres dispositifs de messagerie.

L'invention offre donc une nouvelle architecture et un nouveau procédé de gestion de messagerie fédérée, à la fois simple et peu coûteuse de mise en oeuvre sur la base d'un existant matériel et logiciel, tout en permettant avantageusement à un utilisateur d'accéder à tous ses messages disponibles auprès de comptes de messageries distincts et souvent hétérogènes, indifféremment à partir de n'importe lequel de ses terminaux de communication.

## Revendications

1. Système de gestion de messageries comprenant une pluralité de messageries (201, 209) (202, 209) (203, 209) et (204, 209') adaptées pour recevoir et mémoriser des messages destinés à au moins un utilisateur disposant d'une pluralité de terminaux d'accès auxdites messageries,
ledit système étant **caractérisé en ce qu'**il comprend:
■ des moyens (206, 210) de gestion centralisée de tout évènement propre à tout message stocké auprès desdites messageries respectives, lesdits moyens de gestion centralisée comprenant au moins une base de données (206) de référencement de tous les messages reçus par chacune desdites messageries ;
■ des moyens (213) de traitement de messages stockés par au moins une desdites messageries et référencés dans ladite au moins une base de données de référencement, pour rendre lesdits messages compatibles avec au moins une deuxième messagerie de ladite pluralité de messageries.

2. Système selon la revendication 1, **caractérisé en ce que** lesdits moyens (213) de traitement sont des moyens de traduction d'un nouveau message reçu dans un premier format compatible avec une première desdites messageries, sous la forme d'au moins un message traduit dans un deuxième format prédéterminé compatible avec au moins une deuxième desdites messageries.

3. Système selon l'une quelconque des revendications 1 et 2, **caractérisé en ce qu'**il comprend des moyens (211, 211') de notification de tout évènement relatif à tout nouveau message reçu par une desdites messageries, à destination de toutes lesdites autres messageries.

4. Système selon l'une quelconque des revendications 1 à 3, **caractérisé en ce qu'**il comprend des moyens (211, 211') de notification de tout évènement relatif à un message stocké dans un espace mémoire d'une desdites messageries, à destination de toutes lesdites autres messageries.

5. Système selon l'une quelconque des revendications 1 à 4, **caractérisé en ce que** ledit deuxième format prédéterminé est un format générique, dit format pivot, compatible avec le plus grand nombre de formats de messages acceptés par lesdites messageries de ladite pluralité de messageries.

6. Système selon l'une quelconque des revendications 2 à 5, **caractérisé en ce que** ladite base (206) de données de référencement comprend pour chaque message référencé :
■ un identifiant unique dudit message référencé ;
■ un pointeur d'accès audit message stocké auprès d'une desdites messageries.

7. Système selon l'une quelconque des revendication 1 à 6, **caractérisé en ce qu'**il comprend en outre des moyens (207, 207') de gestion de comptes d'utilisateurs répartis auprès des différentes messageries, chacune desdites messageries sur lesquelles un utilisateur donné possède un compte de messagerie étant référencé dans un profile de messagerie défini pour ledit utilisateur donné.

8. Plateforme (200) de gestion de messageries, **caractérisée en ce qu'**elle comporte un système de gestion de messageries multimédia selon l'une quelconque des revendications 1 à 7.

9. Procédé de gestion d'un système de messageries comprenant une pluralité de messageries (201, 209) (202, 209) (203, 209) et (204, 209') adaptées pour recevoir et mémoriser des messages destinés à au moins un utilisateur disposant d'une pluralité de terminaux d'accès auxdites messageries, ledit procédé étant **caractérisé en ce qu'**il comprend :
■ une étape (300) de gestion centralisée de tout évènement propre à tout message stocké auprès desdites messageries respectives, ladite étape de gestion centralisée incluant le référencement de tous les messages reçus par chacune desdites messageries dans une base de données de référencement ;
■ une étape (301) de traitement de messages stockés par au moins une desdites messageries et référencés dans ladite base de données de référencement, pour rendre lesdits messages compatibles avec au moins une deuxième messagerie de ladite pluralité de messageries.

10. Procédé selon la revendication 9, **caractérisé en ce que** ladite étape (301) de traitement est une étape de traduction d'un nouveau message reçu dans un premier format compatible avec une première desdites messageries, sous la forme d'au moins un message traduit dans un deuxième format prédéterminé compatible avec au moins une deuxième desdites messageries.

11. Procédé selon l'une quelconque des revendications 9 et 10, **caractérisé en ce qu'**il comprend une étape (302) de notification de tout évènement relatif à tout nouveau message reçu par une desdites messageries, à destination de toutes lesdites autres messageries.

12. Produit programme d'ordinateur téléchargeable depuis un réseau de communication et/ou stocké sur un support d'information lisible par ordinateur et/ou exécutable par un microprocesseur, **caractérisé en ce qu'**il comprend des instructions de code pour l'exécution d'un procédé de gestion d'un système de messageries selon l'une quelconque des revendications 9 à 11, lorsqu'il est exécuté sur un terminal d'ordinateur.

## Claims

1. System for managing messaging services comprising a plurality of messaging services (201, 209) (202, 209) (203, 209) and (204, 209') suitable for receiving and storing messages intended for at least one user having a plurality of terminals for accessing said messaging services,
said system being **characterized in that** it comprises:
■ means (206, 210) for centrally managing any event specific to any message stored with said respective messaging services, said centralized management means comprising at least one referencing database (206) for all the messages received by each of said messaging services;
■ means (213) for processing messages stored by at least one of said messaging services and referenced in at least one of said referencing databases to make said messages compatible with at least a second messaging service of said plurality of messaging services.

2. System according to Claim 1, **characterized in that** said processing means (213) are means of translating a new message received in a first format compatible with a first of said messaging services into the form of at least one translated message in a predetermined second format compatible with at least a second of said messaging services.

3. System according to either of Claims 1 and 2, **characterized in that** it comprises means (211, 211') of notifying any event relating to any new message received by one of said messaging services, addressed to all of said other messaging services.

4. System according to any one of Claims 1 to 3, **characterized in that** it comprises means (211, 211') of notifying any event relating to a message stored in a memory space of one of said messaging services, addressed to all of said other messaging services.

5. System according to any one of Claims 1 to 4, **characterized in that** said second predetermined format is a generic format, called pivot format, compatible with the largest number of message formats accepted by said messaging services of said plurality of messaging services.

6. System according to any one of Claims 2 to 5, **characterized in that** said referencing database (206) comprises, for each referenced message:
■ a unique identifier of said referenced message;
■ an access pointer to said message stored with one of said messaging services.

7. System according to any one of Claims 1 to 6, **characterized in that** it also comprises means (207, 207') of managing user accounts allocated to the various messaging services, each of said messaging services on which a given user has a messaging service account being referenced in a messaging service profile defined for said given user.

8. Messaging service management platform (200), **characterized in that** it comprises a multimedia messaging service management system according to any one of Claims 1 to 7.

9. Method for managing a messaging system comprising a plurality of messaging services (201, 209) (202, 209) (203, 209) and (204, 209') suitable for receiving and storing messages intended for at least one user having a plurality of terminals for accessing said messaging service, said method being **characterized in that** it comprises:
■ a step (300) for centrally managing any event specific to any message stored with said respective messaging services, said step for centrally managing including the referencing for all the messages received by each of said messaging services in a referencing database;
■ a step (301) for processing messages stored by at least one of said messaging services and referenced in said referencing database to make said messages compatible with at least one second messaging service of said plurality of messaging services.

10. Method according to Claim 9, **characterized in that** said processing step (301) is a step for translating a new message received in a first format compatible with a first of said messaging services, into the form of at least one translated message in a predetermined second format compatible with at least a second of said messaging services.

11. Method according to either of Claims 9 and 10, **characterized in that** it comprises a step (302) for notifying any event relating to any new message received by one of said messaging services, addressed to all of said other messaging services.

12. Computer program product that can be downloaded from a communication network and/or stored on an information medium that can be read by computer and/or executed by a microprocessor, **characterized in that** it comprises code instructions for executing a method for managing a system of messaging services according to any one of Claims 9 to 11, when it is executed on a computer terminal.

## Patentansprüche

1. System zur Verwaltung von Mitteilungsdiensten, das eine Vielzahl von Mitteilungsdiensten (201, 209) (202, 209) (203, 209) und (204, 209') enthält, die geeignet sind, um Mitteilungen zu empfangen und zu speichern, welche für mindestens einen Benutzer bestimmt sind, der über eine Vielzahl von Endgeräten zum Zugriff auf die Mitteilungsdienste verfügt,
wobei das System **dadurch gekennzeichnet ist, dass** es enthält:
• Einrichtungen (206, 210) zur zentralisierten Verwaltung jedes Ereignisses, das jeder Mitteilung eigen ist, die in den jeweiligen Mitteilungsdiensten gespeichert ist, wobei die Einrichtungen zur zentralisierten Verwaltung mindestens eine Referenzierungs-Datenbank (206) aller von jedem der Mitteilungsdienste empfangenen Mitteilungen enthalten;
• Einrichtungen (213) zur Verarbeitung von Mitteilungen, die in mindestens einem der Mitteilungsdienste gespeichert und in der mindestens einen Referenzierungs-Datenbank referenziert sind, um die Mitteilungen mit mindestens einem zweiten Mitteilungsdienst der Vielzahl von Mitteilungsdiensten kompatibel zu machen.

2. System nach Anspruch 1, **dadurch gekennzeichnet, dass** die Verarbeitungseinrichtungen (213) Einrichtungen zur Umsetzung einer neuen, in einem ersten Format empfangenen Mitteilung, das mit einem ersten der Mitteilungsdienste kompatibel ist, in die Form mindestens einer Mitteilung sind, die in ein zweites vorbestimmtes Format umgesetzt ist, das mit mindestens einem zweiten der Mitteilungsdienste kompatibel ist.

3. System nach einem der Ansprüche 1 und 2, **dadurch gekennzeichnet, dass** es Einrichtungen (211, 211') zur Benachrichtigung über jedes Ereignis bezüglich jeder neuen Mitteilung, die von einem der Mitteilungsdienste empfangen wird, an alle anderen Mitteilungsdienste enthält.

4. System nach einem der Ansprüche 1 bis 3, **dadurch gekennzeichnet, dass** es Einrichtungen (211, 211') zur Benachrichtigung über jedes Ereignis bezüglich einer in einem Speicher eines der Mitteilungsdienste gespeicherten Mitteilung an alle anderen Mitteilungsdienste enthält.

5. System nach einem der Ansprüche 1 bis 4, **dadurch gekennzeichnet, dass** das zweite vorbestimmte Format ein generisches Format, Pivot-Format genannt, ist, das mit der größten Anzahl von Formaten von Mitteilungen kompatibel ist, die von den Mitteilungsdiensten der Vielzahl von Mitteilungsdiensten akzeptiert werden.

6. System nach einem der Ansprüche 2 bis 5, **dadurch gekennzeichnet, dass** die Referenzierungs-Datenbank (206) für jede referenzierte Mitteilung enthält:
• eine einzige Kennung der referenzierten Mitteilung;
• einen Zugriffszeiger auf die in einem der Mitteilungsdienste gespeicherte Mitteilung.

7. System nach einem der Ansprüche 1 bis 6, **dadurch gekennzeichnet, dass** es außerdem Einrichtungen (207, 207') zur Verwaltung von Benutzerkonten enthält, die auf die verschiedenen Mitteilungsdienste verteilt sind, wobei jeder der Mitteilungsdienste, in denen ein gegebener Benutzer ein Mitteilungsdienstkonto besitzt, in einem Mitteilungsdienstprofil referenziert ist, das für den gegebenen Benutzer definiert ist.

8. Verwaltungsplattform (200) von Mitteilungsdiensten, **dadurch gekennzeichnet, dass** sie ein System zur Verwaltung von Multimedia-Mitteilungsdiensten nach einem der Ansprüche 1 bis 7 aufweist.

9. Verfahren zur Verwaltung eines Mitteilungsdienstsystems, das eine Vielzahl von Mitteilungsdiensten (201, 209) (202, 209) (203, 209) und (204, 209') enthält, die geeignet sind, um Mitteilungen zu empfangen und zu speichern, welche für mindestens einen Benutzer bestimmt sind, der über eine Vielzahl von Endgeräten zum Zugriff auf die Mitteilungsdienste verfügt, wobei das Verfahren **dadurch gekennzeichnet ist, dass** es enthält:
• einen Schritt (300) zur zentralisierten Verwaltung jedes Ereignisses, das jeder Mitteilung eigen ist, die in den jeweiligen Mitteilungsdiensten gespeichert ist, wobei der Schritt der zentralisierten Verwaltung die Referenzierung aller von jedem der Mitteilungsdienste empfangenen Mitteilungen in einer Referenzierungs-Datenbank enthält;
• einen Schritt (301) zur Verarbeitung von Mitteilungen, die in mindestens einem der Mitteilungsdienste gespeichert und in der Referenzierungs-Datenbank referenziert sind, um die Mitteilungen mit mindestens einem zweiten Mitteilungsdienst der Vielzahl von Mitteilungsdiensten kompatibel zu machen.

10. Verfahren nach Anspruch 9, **dadurch gekennzeichnet, dass** der Verarbeitungsschritt (301) ein Schritt der Umsetzung einer neuen, in einem ersten Format empfangenen Mitteilung, das mit einem ersten der Mitteilungsdienste kompatibel ist, in die Form mindestens einer Mitteilung ist, die in ein zweites vorbestimmtes Format umgesetzt ist, das mit mindestens einem zweiten der Mitteilungsdienste kompatibel ist.

11. Verfahren nach einem der Ansprüche 9 und 10, **dadurch gekennzeichnet, dass** es einen Schritt (302) der Benachrichtigung über jedes Ereignis bezüglich jeder neuen Mitteilung, die von einem der Mitteilungsdienste empfangen wird, an alle anderen Mitteilungsdienste enthält.

12. Computerprogrammprodukt, das von einem Kommunikationsnetzwerk heruntergeladen und/oder auf einem computerlesbaren Träger gespeichert und/oder von einem Mikroprozessor ausgeführt werden kann, **dadurch gekennzeichnet, dass** es Codeanweisungen für die Ausführung eines Verfahrens zu Verwaltung eines Mitteilungsdienstsystems nach einem der Ansprüche 9 bis 11 enthält, wenn es auf einem Computer-Endgerät ausgeführt wird.
